# EUROPEAN PATENT SPECIFICATION

(11) **EP 2 209 070 B1**
(45) Date of publication and mention of the grant of the patent: **08.01.2014**
(21) Application number: 09305039.1
(22) Date of filing: 16.01.2009
(51) Int. Cl.: G06F 13/40

(54) **Telecommunication network server**
Telekommunikationsnetzwerkserver
Serveur de réseau de télécommunications

(43) Date of publication of application: 21.07.2010
(73) Proprietor: Alcatel Lucent, 75007 Paris (FR)
(72) Inventor: Gervais, Lionel, 22300 Ploubezre (FR)
(74) Representative: Therias, Philippe

(56) References cited:
- EP-A- 0 747 803
- US-A- 5 941 969
- US-A1- 2005 044 284

## Description

The present invention relates to a telecommunication network server.

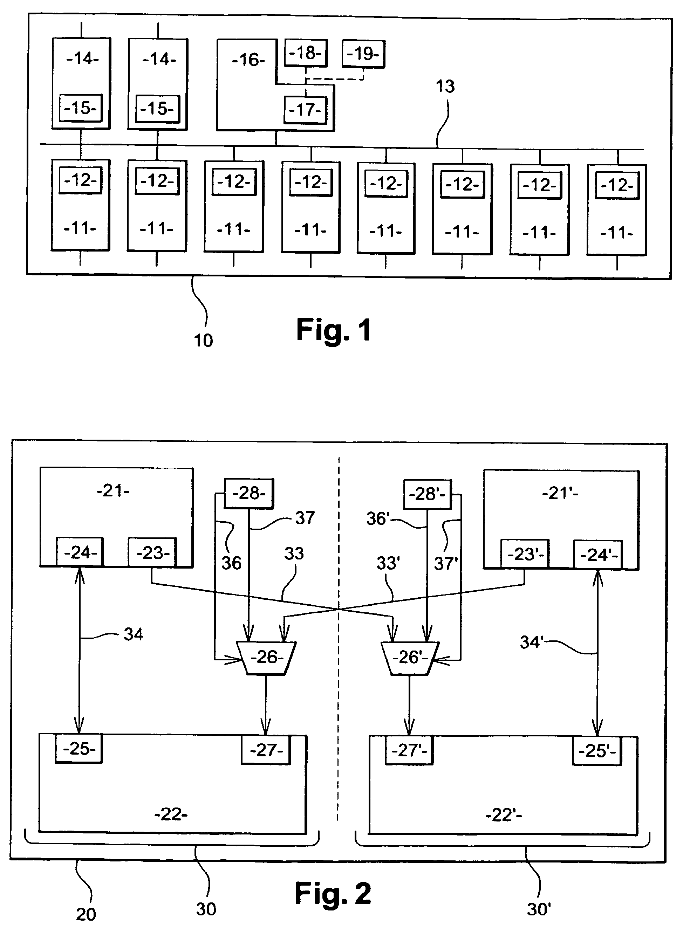

Using a server 10 (figure 1) is known for managing the establishment of communications between terminals, particularly mobile terminals. For this purpose, server 10 is equipped with a plurality of cards 11 comprising the components necessary for establishing these communications.

In order to develop compatibility between servers produced by different manufacturers, standards such as the ATCA (Advanced Telecom Computing Architecture) standards have been developed to define the architectures of such a server 10 equipped with a plurality of cards.

In the context of these ATCA standards, technical specifications such as the 3.0 R2.0 specification from the PICMG^{®} (PCI Industrial Computer Manufacturers) Group requires server resource controllers 14 in order to, in particular, activate a card 11 held on standby when another card 11 presents a malfunction.

Through a bus 13, the controllers 14, also known as "Shelf Managers," are connected to the cards 11 to, for example, be informed of their states and/or to control their operations.

This communication between controllers 14 and cards 11 is permitted by the use of a common language compliant with, for example, IPMI (Intelligent Platform Management Interface) specifications, which allow components such as a fan or a temperature probe to be monitored.

In this case, cards 11 comprise components 12, subsequently known as IPMC (Intelligent Platform Management Controllers) components, that may communicate via an IMPB (Intelligent Platform Management Bus) bus 13 with components 15 of controllers 14, also IPMI specification compliant.

Thus, interface 12 of each card 11 enables commands transmitted by an external controller 14 to the card to be transmitted to a processor, not represented, of this same card, this processor consequently controlling the elements of the card such as a fan or a probe.

In general, various server 10 elements may utilize the IPMB bus 13 to communicate. Similarly, components which do not have internal IPMI components, like power supplies 18 and 19 as well as an associated module 16, may share an IPMC interface 17 to control the power supply of cards 11.

The present invention results from the observation that the type of structure previously described, implementing controllers 14, presents a high cost when servers presenting a small number of cards, for example 2, have to be managed within a server.

In fact, the ratio between the cost of controllers and the cost of cards is acceptable when a high number, typically 14 or 16, of cards are managed in a server. However, this ratio becomes too high when the number of cards diminishes in a server typically presenting fewer than 10 cards.

The present invention relates to a telecommunication network server as defined in independent claim 1.

Further embodiments of the invention are specified in the dependent claims.

Thanks to the invention, it is possible to ensure that a card is checked within a server by the processor of another card from this server. Thus, the cost of a server is reduced by the absence of controllers dedicated to the operation of cards since the card processor is used as an external controller for another card.

In one embodiment, the processor of the first card comprises means to activate the second card in case of malfunction of the first card and means to maintain the second card on standby in case of correct operation of the first card.

According to one embodiment, the processor of the first card is connected to the interface of the second card through a switch allowing the second card to be checked by using commands transmitted by an external element to the first card and to the second card.

In one embodiment, the controlled elements comprise at least a fan, a probe, a filter or a power supply.

According to one embodiment, the processor of the first card presents a first UART port connected to the interface of the first card and a second UART port connected to the interface of the second card.

In one embodiment, the link between the processor of the first card and the interface of the second card is made by means of an RS232 link.

According to an embodiment, the interface of the second card comprises an IPMC controller.

In an embodiment, the second card is connected to the first card interface to enable the first card to be checked by using commands transmitted by the second card processor in the same manner as the checking of the second card by the first card interface.

The invention also relates to a process for managing a server for a telecommunication network as defined in independent claim 9.

Other characteristics and advantages of the invention will emerge clearly from the description given below, for indicative and in no way limiting purposes, with reference to the various attached figures that show:
- In Figure 1, already described, a schematic representation of a telecommunication server in conformance with the prior art, and
- In Figure 2 a schematic representation of a server in conformance with the invention.

With reference to Figure 2, an "1+1" type server 20 is represented, presenting two unique cards 30 and 30' associated in such a way that one card is active while the other card is passive, that is to say, on standby.

For example, card 30 is active and manages communications while card 30' is kept waiting for a possible malfunction of card 30 to take over for it.

For this purpose, cards 30 use interface IPMC 22 to transmit operating parameters such as, for example, temperatures, states, alarms and/or voltages relative to a filter, a sensor and/or a fan of this card 30 to its processor 21.

To do this, a link 34 connects an internal port 24 of processor 21 with an internal port 25 of IPMC interface 22, this port 25 being referred to as a "serial payload" in the previously cited specifications.

Similarly, card 30' presents a link 34' connecting an internal port 24' of its processor 21' with an internal port 25' of its IPMC interface 22'.

In conformance with this embodiment of the invention, the card 30' utilizes its IPMC interface 22' to communicate with processor 21 of card 30 and to transmit to the latter operating parameters such as, for example, temperatures, states and/or voltages relative to a filter, a sensor and/or a fan of this card 30'.

To do this, a link 33 connects an external port 23 of processor 21 with an external port 27' of IPMC interface 22' such that processor 21 may, according to the parameters transmitted by IMPMC interface 22', control the operation of card 30'.

For this purpose, processor 21 may control the operation of card 22' by means of IPMI control signals recognized by the IPMC interface 22'.

In this preferred embodiment, the invention is implemented with a reduced cost by using an external port 27' existing in IMPC interface 22', this port 27' being referred to as a "serial debug" in the specifications that have already been mentioned.

This external port 27' enables processor 21 to control the IPMC interface 22' via a switch 26', also enabling external element 28' to control interface 22', for example, to perform reprogramming of the card.

This is why switch 26' presents an external link detector 37' that, in case of activation, gives priority to the commands 36' issued from external element 28'.

In addition, processor 21' of card 30' is connected to interface 22 of card 30 in the same way as the link between processor 21 of card 30 and interface 22' of card 30', which possibly allows checking of card 30 to be allowed by using commands transmitted by processor 21' of card 30'.

In other words, the two cards 30 and 30' are identical, an element X of card 30 thus presents an equivalent element noted X' for card 30', which enables the use of one or the other of cards 30 or 30' as the active card in charge of controlling the other passive card.

As previously indicated, in this embodiment, card 30 is active such that its processor 21 controls both its operation and that of card 30', for example to turn on, reprogram or turn off this card 30' according to the temperature, voltage, state or alarm parameters that have already been mentioned.

In a practical manner, ports 23, 23', 24 and 24' are, in this embodiment, UART (Universal Asynchronous Receiver Transmitter) type serial ports.

These first ports are connected to respective ports 25, 25', 27 or 27', which are also UART ports, via links 33, 33', 34 and 34' such that RS232 links, suitable for serial transmission, enable the transmission and reception of data.

A server in compliance with the invention may particularly be implemented in the field of wireless telecommunications, for example of the WI-MAX or GSM type. In addition, it should be noted that such a server may be used within more complex equipment, for example in order to perform signal processing using the Internet Protocol, in a mobile telephony network.

## Claims

1. A server (20) for a telecommunications network comprising at least a first card (30) and a second card (30') equipped with elements to manage transmissions transmitted or received by mobile terminals, this first card (30) and this second card (30') each comprising a processor (21, 21') and an interface (22, 22'), each interface being configured to receive commands transmitted by an external controller to the card (30, 30') of the interface, **characterized in that** the first card (30) being configured to be active while the second card (30') is on standby, the second card (30') being adapted to transmit operating parameters to said first card (30) via the interface (22') of the second card, and the processor (21) of the first card (30) being connected to the interface (22') of the second card (30') to enable control of the second card (30') by the processor (21) of the first card according to the transmitted operating parameters.

2. The server (20) according to claim 1 **characterized in that** the processor (21) of the first card (30) comprises means to activate the second card (30') in case of malfunction of the first card (30) and means to maintain on standby the second card (30') in case of the correct operation of the first card (30).

3. The server (20) according to claim 1 or 2 **characterized in that** the processor (21) of the first card (30) is connected to the interface (22') of the second card (30') through a switch (26') enabling the second card (30') to be checked by using commands transmitted by an external element (28') to the first (30) and to the second card (30').

4. The server (20) according to claim 1, 2 or 3 **characterized in that** the controlled elements comprise at least a fan, a probe, a filter or a power supply.

5. The server (20) according to one of the previous claims **characterized in that** the processor (21) of the first card (30) presents a first UART port (24) connected to the interface (22) of the first card (30) and a second UART port (23) connected to the interface (22') of the second card (30').

6. The server (20) according to one of the previous claims **characterized in that** the link (33) between the processor (21) of the first card (30) and the interface (22') of the second card (30') is made by means of an RS232 connection.

7. The server (20) according to one of the previous claims **characterized in that** the interface (22') of the second card (30') comprises an IPMC controller.

8. The server (20) according to one of the previous claims **characterized in that** the processor (21') of the second card (30') is connected to the interface (22) of the first card (30) to enable the first card (30) to be checked by using commands transmitted by the processor (21') of the second card (30') in the same way as the check of the second card (30') by the processor (21) of the first card (30).

9. A process for managing a server (20) for a telecommunication network, this server (20) comprising at least a first card (30) and a second card (30') equipped with elements managing the transmissions transmitted or received by the mobile terminals, each of this first card and this second card comprising a processor (21, 21') to control the operation of elements of this card (30, 30') from commands transmitted by an external element to the card and received by an interface (22, 22') of this latter, **characterized in that** said server (20) is in accordance with one of the previous claims and is implemented in order to control the second card by using commands transmitted by the processor of the first card to the interface of the second card.

## Patentansprüche

1. Server (20) für ein Telekommunikationsnetzwerk, umfassend:
Mindestens eine erste Platine (30) und eine zweite Platine (30'), welche mit Elementen für die Verwaltung von von mobilen Endgeräten gesendeten oder empfangenen Übertragungen bestückt sind, wobei die besagte erste Platine (30) und die besagte zweite Platine (30') jeweils einen Prozessor (21, 21') und eine Schnittstelle (22, 22') umfassen, wobei jede Schnittstelle für den Empfang von von einem externen Controller an die Platine (30, 30') der Schnittstelle übertragenen Befehlen konfiguriert ist, **dadurch gekennzeichnet, dass** die erste Platine (30) dafür konfiguriert ist, aktiv zu sein, während sich die zweite Platine (30') im Standby-Modus befindet, und dass die zweite Platine (30') für die Übertragung von Betriebsparametern an die besagte erste Platine (30) über die Schnittstelle (22') der zweiten Platine (30') ausgelegt ist, wobei der Prozessor (21) der ersten Platine (30) an die Schnittstelle (22') der zweiten Platine (30') angeschlossen ist, um die Steuerung der zweiten Platine (30') durch den Prozessor (21) der ersten Platine gemäß den übertragenen Betriebsparametern zu ermöglichen.

2. Server (20) nach Anspruch 1, **dadurch gekennzeichnet, dass** der Prozessor (21) der ersten Platine (30) Mittel zum Aktivieren der zweiten Platine (30') im Fall einer Betriebsstörung der ersten Platine (30) sowie Mittel zum Halten der zweiten Platine (30') im Standby-Modus im Fall des korrekten Betriebs der ersten Platine (30) umfasst.

3. Server (20) nach Anspruch 1 oder 2, **dadurch gekennzeichnet, dass** der Prozessor (21) der ersten Platine (30) über einen Schalter (26') an die Schnittstelle (22') der zweiten Platine (30') angeschlossen ist, um eine Prüfung der zweiten Platine (30') unter Ausführung der von einem externen Element (28') an die erste (30) und an die zweite Platine (30') übertragenen Befehle zu ermöglichen.

4. Server (20) nach Anspruch 1, 2 oder 3, **dadurch gekennzeichnet, dass** die gesteuerten Elemente mindestens einen Ventilator, einen Sensor, einen Filter oder eine Stromversorgung umfassen.

5. Server (20) nach einem der vorstehenden Ansprüche, **dadurch gekennzeichnet, dass** der Prozessor (21) der ersten Platine (30) einen ersten UART-Port (24), welcher an die Schnittstelle (22) der ersten Platine (30) angeschlossen ist, und einen zweiten UART-Port (23), welcher an die Schnittstelle (22') der zweiten Platine (30') angeschlossen ist, aufweist.

6. Server (20) nach einem der vorstehenden Ansprüche, **dadurch gekennzeichnet, dass** die Verbindung (33) zwischen dem Prozessor (21) der ersten Platine (30) und der Schnittstelle (22') der zweiten Platine (30') anhand einer RS232-Verbindung erfolgt.

7. Server (20) nach einem der vorstehenden Ansprüche, **dadurch gekennzeichnet, dass** die Schnittstelle (22') der zweiten Platine (30') einen IPMC-Controller umfasst.

8. Server (20) nach einem der vorstehenden Ansprüche, **dadurch gekennzeichnet, dass** der Prozessor (21') der zweiten Platine (30') an die Schnittstelle (22) der ersten Platine (30) angeschlossen ist, um eine Prüfung der ersten Platine (30) unter Ausführung der von dem Prozessor (21') der zweiten Platine (30') übertragenen Befehle in derselben Weise wie die Prüfung der zweiten Platine (30') durch den Prozessor (21) der ersten Platine (30) zu ermöglichen.

9. Verfahren zur Verwaltung eines Servers (20) für ein Telekommunikationsnetzwerk, wobei der besagte Server (20) mindestens eine erste Platine (30) und eine zweite Platine (30'), welche mit Elementen für die Verwaltung von von mobilen Endgeräten gesendeten oder empfangenen Übertragungen bestückt sind, umfasst, wobei eine jede der besagten ersten Platine und der besagten zweiten Platine jeweils einen Prozessor (21, 21') für die Verwaltung des Betriebs der Elemente dieser Platine (30, 30') ausgehend von Befehlen, die von einem externen Element an die Platine übertragen und an einer Schnittstelle (22, 22') dieser empfangen wurden, umfasst, **dadurch gekennzeichnet, dass** der besagte Server (20) gemäß einem der vorstehenden Ansprüche implementiert wird, um die zweite Platine unter Ausführung der von dem Prozessor an die erste Platine der Schnittstelle der zweiten Platine übertragenen Befehle zu steuern.

## Revendications

1. Serveur (20) pour un réseau de télécommunication comprenant
au moins une première carte (30) et une deuxième carte (30') équipées d'éléments pour gérer des transmissions transmises ou reçues par des terminaux mobiles, cette première carte (30) et cette deuxième carte (30') comprenant chacune un processeur (21, 21') et une interface (22, 22'), chaque interface étant configurée pour recevoir des commandes transmises par un contrôleur externe à la carte (30, 30') de l'interface, **caractérisé en ce que** la première carte (30) est configurée pour être active alors que la deuxième carte (30') est en veille, et la deuxième carte (30') est adaptée pour transmettre des paramètres de fonctionnement à ladite première carte (30) par l'intermédiaire de l'interface (22') de la deuxième carte (30'), le processeur (21) de la première carte (30) étant connecté à l'interface (22') de la deuxième carte (30') pour permettre le contrôle de la deuxième carte (30') par le processeur (21) de la première carte, conformément aux paramètres de fonctionnement transmis.

2. Serveur (20) selon la revendication 1 **caractérisé en ce que** le processeur (21) de la première carte (30) comprend des moyens pour activer la deuxième carte (30') en cas de dysfonctionnement de la première carte (30) et des moyens pour maintenir en veille la deuxième carte (30') en cas de fonctionnement correct de la première carte (30).

3. Serveur (20) selon la revendication 1 ou 2 **caractérisé en ce que** le processeur (21) de la première carte (30) est connecté à l'interface (22') de la deuxième carte (30') par l'intermédiaire d'un commutateur (26') permettant à la deuxième carte (30') d'être vérifiée en utilisant des commandes transmises par un élément externe (28') à la première (30) et à la deuxième carte (30').

4. Serveur (20) selon la revendication 1, 2 ou 3 **caractérisé en ce que** les éléments contrôlés comprennent au moins un ventilateur, une sonde, un filtre ou un bloc d'alimentation.

5. Serveur (20) selon l'une des revendications précédentes **caractérisé en ce que** le processeur (21) de la première carte (30) présente un premier port UART (24) connecté à l'interface (22) de la première carte (30) et un deuxième port UART (23) connecté à l'interface (22') de la deuxième carte (30').

6. Serveur (20) selon l'une des revendications précédentes **caractérisé en ce que** la liaison (33) entre le processeur (21) de la première carte (30) et l'interface (22') de la deuxième carte (30') est réalisée au moyen d'une connexion RS232.

7. Serveur (20) selon l'une des revendications précédentes **caractérisé en ce que** l'interface (22') de la deuxième carte (30') comprend un contrôleur IPMC.

8. Serveur (20) selon l'une des revendications précédentes **caractérisé en ce que** le processeur (21') de la deuxième carte (30') est connecté à l'interface (22) de la première carte (30) pour permettre à la première carte (30) d'être vérifiée en utilisant des commandes transmises par le processeur (21') de la deuxième carte (30') comme la vérification de la deuxième carte (30') par le processeur (21) de la première carte (30).

9. Processus de gestion d'un serveur (20) pour un réseau de télécommunication, ce serveur (20) comprenant au moins une première carte (30) et une deuxième carte (30') équipées d'éléments gérant les transmissions transmises ou reçues par les terminaux mobiles, chacune de ces première et deuxième cartes comprenant un processeur (21, 21') pour contrôler le fonctionnement d'éléments de cette carte (30, 30') à partir de commandes transmises par un élément externe à la carte et reçues par une interface (22, 22') de cette dernière, **caractérisé en ce que** ledit serveur (20) est conforme à une des revendications précédentes et est mis en oeuvre afin de contrôler la deuxième carte en utilisant des commandes transmises par le processeur de la première carte à l'interface de la deuxième carte.
